# EUROPEAN PATENT SPECIFICATION

(11) **EP 3 886 381 B1**
(45) Date of publication and mention of the grant of the patent: **16.09.2026**
(21) Application number: 19887079.2
(22) Date of filing: 16.10.2019
(51) Int. Cl.: H04L 61/103, H04L 45/00, H04L 49/15, H04L 49/25, H04L 49/00, H04L 101/622

(54) **MESSAGE PROCESSING METHOD AND APPARATUS**
NACHRICHTENVERARBEITUNGSVERFAHREN UND -VORRICHTUNG
PROCÉDÉ ET APPAREIL DE TRAITEMENT DE MESSAGES

(30) Priority: 23.11.2018 CN 201811409018
(43) Date of publication of application: 29.09.2021
(73) Proprietor: ZTE Corporation, Shenzhen, Guangdong 518057 (CN)
(72) Inventor: LIN, Ning, Shenzhen, Guangdong 518057 (CN)
(74) Representative: Mozzi, Matteo
(86) International application number: PCT/CN2019/111491
(87) International publication number: WO 2020/103614

(56) References cited:
- WO-A1-2016/177211
- CN-A- 1 874 310
- CN-A- 1 874 310
- CN-A- 103 347 031
- CN-A- 106 888 282
- CN-A- 107 995 315
- CN-A- 108 259 635
- CN-B- 101 335 610
- US-A1- 2013 297 671

## Description

### Technical Field

The present disclosure relates to the field of communications, and in particular to a packet processing method and device, a storage medium, and an electronic device.

### Background

In the related art, a mechanism for Address Resolution Protocol (ARP) synchronization of a distributed network device is realized in the following manner: in a case where a certain board in the distributed network device receives an ARP packet, the distributed network device writes the ARP entry into the board. Meanwhile, in order to ensure that each board can correctly find the forwarding path of this ARP entry, the CPU of the distributed network device will synchronously write this ARP entry to all boards to inform other boards of the forwarding path of this ARP entry. It can be seen from the above method that each written ARP entry is synchronized to other boards. If multiple ARP packets are written into different boards, the ARP packets written into each board are synchronized to other boards. However, a board has a limited bearing capacity, and if important data information needs to be synchronized to other packets, a situation of full storage is likely to result in denial of synchronization, which may cause a huge trouble to a user. In addition, the above design requires a board with a larger ARP bearing capacity, and therefore the cost of the device is very high. In addition, in the process of writing the packet into the boards, it needs to be ensured that the maximum ARP bearing capacity of each board in the device can meet the requirements. If the maximum ARP bearing capacity of one of the boards cannot meet the requirements, the whole device is influenced by the one board not meeting the requirements.

CN101335610A discloses an ARP method for synchronous in a kind of high-end Ethernet switch. CN 1874310 A discloses a Synchronous method of the address resolution protocol data in the distributed apparatus.

### Summary

Embodiments of the present disclosure provide a packet processing method, a storage medium, and an electronic device, which may solve the problems that an ARP synchronization mechanism in the related art results in a high cost and a low use efficiency of a network device, and thus cannot meet user requirements.

The present application is set out in the appended set of claims.

According to some embodiments of the present disclosure, provided is a packet processing method. The packet processing method includes: in a case where a first board of a device receives an ARP packet, a processor of the device writes an ARP entry formed according to the ARP packet. into the first board; and in a case where a second board of the device receives a data packet pointing to the ARP entry, the processor synchronizes the ARP entry only to the second board.

According to some other embodiments of the present disclosure, provided is a packet processing device. The packet processing device is located in a processor of a device and includes: a learning module, configured to write, in a case where a first board of the device receives an ARP packet, an ARP entry formed according to the ARP packet into the first board; and a synchronizing module, configured to, in a case where a second board of the device receives a data packet pointing to the ARP entry, synchronize the ARP entry only to the second board.

According to some other embodiments of the present disclosure, provided is a storage medium. The storage medium stores a computer program, wherein the computer program is configured to execute the operations in any one of the method embodiments at runtime.

According to some other embodiments of the present disclosure, provided is an unclaimed electronic device, including a memory and a processor, wherein the memory stores a computer program, and the processor is configured to run the computer program to execute the operations in any one of the method embodiments.

By means of the embodiments of the present disclosure, when a board performs ARP learning, an ARP entry is issued only to the board learning the ARP, and synchronization of other boards is not performed. The embodiments of the present disclosure can solve the problems that an ARP synchronization mechanism in the related art results in a high cost and a low use efficiency of a network device, and thus cannot meet user requirements, thereby achieving the effects of optimizing the utilization rate of the network device and saving the network costs.

### Brief Description of the Drawings

The accompanying drawings described herein are used to provide a deeper understanding of the present disclosure, and constitute a part of the present disclosure. The exemplary embodiments of the present disclosure and the description thereof are used to explain the present disclosure. The drawings and the exemplary embodiment do not constitute limitations to the present disclosure. In the drawings:
Fig. 1 is a hardware structural block diagram of a mobile terminal to which a packet processing method is applied according to some embodiments of the present disclosure;
Fig. 2 is a flowchart of a packet processing method according to some embodiments of the present disclosure; and
Fig. 3 is a structural block diagram of a packet processing device according to some embodiments of the present disclosure.

### Detailed Description

The present disclosure is described below in detail with reference to the drawings and in conjunction with the embodiments. It is to be noted that embodiments in the present disclosure and characteristics in the embodiments may be combined to derive other embodiments not explicitly described.

It is to be noted that the terms "first", "second" and the like in the specification, the claims and the drawings of the present disclosure are used to distinguish similar objects, and are not used to describe a specific sequence or a precedence order.

### Embodiment 1

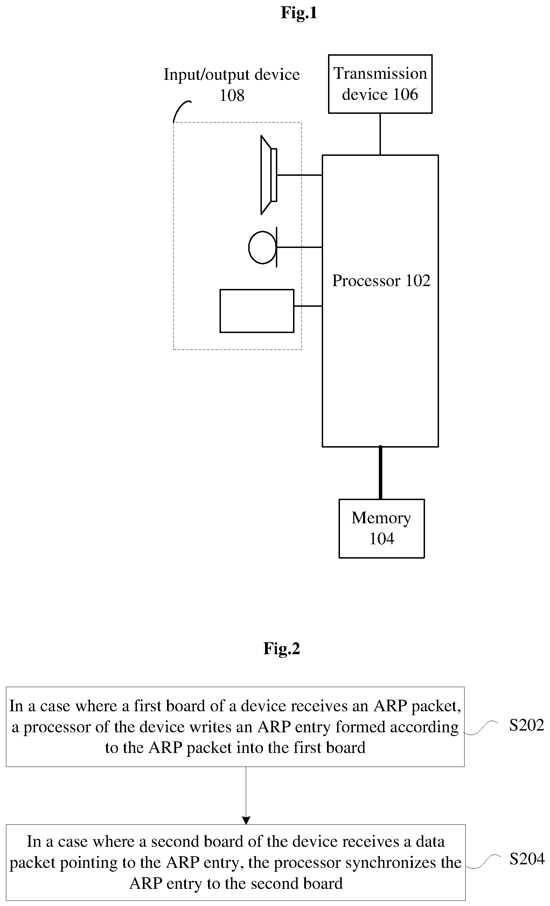

The packet processing method provided in the embodiments of the present disclosure may be executed in a mobile terminal, a computer terminal, or a similar computing device. Taking the execution on a mobile terminal as an example, Fig. 1 is a hardware structural block diagram of a mobile terminal to which a packet processing method is applied according to some embodiments of the present disclosure. As shown in Fig. 1, the mobile terminal 10 may include one or more (only one shown in Fig. 1) processors 102 (each processor 102 may include, but is not limited to, a processing device such as a microprocessor (MCU) or a programmable logic device (FPGA)) and a memory 104 for storing data. In some exemplary implementations, the mobile terminal may further include a transmission device 106 and an input/output device 108 for communication functions. A person having ordinary skill in the art can understand that the structure shown in Fig. 1 is merely exemplary, and does not limit the structure of the foregoing mobile terminal. For example, the mobile terminal 10 may also include more or fewer components than shown in Fig. 1, or have a different configuration than that shown in Fig. 1.

The memory 104 may be configured to store a computer program, for example, a software program and a module of application software, such as a computer program corresponding to the packet processing method in the embodiments of the present disclosure. The processor 102 runs the computer program stored in the memory 104, so as to execute various function applications and data processing, that is, to implement the foregoing packet processing method. The memory 104 may include high-speed random access memory, and may also include non-volatile memory, such as one or more magnetic storage devices, flash memory, or other non-volatile solid-state memory. In some instances, the memory 104 may further include memory remotely located from the processor 102, which may be connected to the mobile terminal 10 over a network. Examples of such networks include, but are not limited to, the Internet, intranets, local area networks, mobile communication networks, and combinations thereof.

The transmission device 106 is configured to receive or transmit data via a network. Specific examples of the described network may include a wireless network provided by a communication provider of the mobile terminal 10. In one example, the transmission device 106 may include a Network Interface Controller (NIC) that may be coupled to other network devices via a base station to communicate with the Internet. In one example, the transmission device 106 may be a Radio Frequency (RF) module for communicating wirelessly with the Internet.

The embodiments provide a packet processing method running on the described mobile terminal. Fig. 2 is a flowchart of a packet processing method according to some embodiments of the present disclosure. As shown in Fig. 2, the flow includes operations S202 and S204 which are described below in detail.

At operation S202, in a case where a first board of a device receives an ARP packet, a processor of the device writes an ARP entry formed according to the ARP packet into the first board.

At operation S204, in a case where a second board of the device receives a data packet pointing to the ARP entry, the processor synchronizes the ARP entry to the second board.

In some exemplary implementations, the operation that the processor writes the ARP entry formed according to the ARP packet into the first board may be implemented in the following manner. After receiving the ARP packet, the processor generates the ARP entry. According to a port number of the ARP packet, the processor determines the first board and sends the ARP entry to the first board.

In some exemplary implementations, the operation that the processor synchronizes the ARP entry to the second board may be implemented in the following manner. The processor receives the data packet sent by the second board based on a subnet route, wherein the subnet route is a route determined by the second board in the device after failing to find a host route corresponding to the data packet. Upon determining that an egress of the data packet is the first board, the processor sends the data packet to the first board in a manner of software forwarding. The processor synchronizes the ARP entry to the second board.

In some exemplary implementations, in a case where the second board receives a data packet (for example, traffic of an ARP) and the second board finds that the second board fails to locally learn the ARP entry corresponding to this data packet, the second board searches for a subnet routing table related to the data packet, and sends the data packet to the found subnet route, so that the subnet route sends the data packet to the processor.

In some exemplary implementations, the processor queries, according to the ARP table stored in the processor, that the data packet should have been forwarded to the first board, that is, the egress is the port of the first board. However, the information is sent to the first board by means of software forwarding. Meanwhile, the processor may further determine whether it is necessary to synchronize the ARP entry to the second board. If it is necessary to synchronize the ARP entry to the second board, the processor sends the ARP entry corresponding to the data packet to the second board. If it is not necessary to synchronize the ARP entry to the second board, no other operations will be performed.

In some exemplary implementations, in a case where the second board receives the data packet again, the second board sends the data packet to the first board in a manner of hardware forwarding.

In some exemplary implementations, the packet processing method may further include the following operations. The processor determines whether the ARP entry of the second board is hit by the data packet within an aging time. In a case where the ARP entry of the second board is not hit by the data packet within the aging time, the processor instructs the second board to delete the ARP entry.

In some exemplary implementations, in a case where the second board receives the data packet again, the processor re-synchronizes the ARP entry to the second board.

In some exemplary implementations, the packet processing method may further include the following operation. In a case where the ARP entry of the first board is not hit by the data packet within the aging time, the processor instructs the first board to delete the ARP entry.

In some exemplary implementations, the packet processing method may further include the following operations. The processor queries a synchronization status of a third board, wherein the third board is a synchronous board to which the ARP entry of the first board has been synchronized. In a case where it is determined that the ARP entry has been synchronized to the third board in synchronous boards, the processor instructs the third board to delete the ARP entry.

In some exemplary implementations, the operation that the processor writes the ARP entry formed according to the ARP packet into the first board may further include an operation that the processor writes egress port information and MAC information of the ARP into the first board.

The embodiments provide the following exemplary implementation scenarios, so as to facilitate the understanding of the technical solutions.
Scenario 1:
   ARP learning of 10.10.10.1 is received on the port a of the board A of the distributed device (the port a has three layers of interfaces, and the configured IP address is 10.10.10.2 255.255.255.0).
   1. The board A of the device receives, at port a, an ARP packet of 10.10.10.1.
   2. The board A of the device reports the ARP packet to the CPU to form a software ARP entry 10.10.10.1 on the CPU.
   3. The CPU issues ARP 10.10.10.1 and information related to the ARP, such as the egress information (i.e., port a) and other MAC related information, to the board A according to the fact that the APR entry is from the board A.
   4. The device does not synchronize the ARP information to other boards, and ends the ARP learning process.
Scenario 2:
   In a case where an IP packet of which the destination address is 10.10.10.1 is received at the port b of the board B of the distributed device, layer-3 forwarding is required to be performed.
   1. The board B of the device receives, at the port b, the IP packet whose destination address is 10.10.10.1.
   2. The board B searches the hardware host routing table and cannot find the host route of 10.10.10.1, but can find the subnet route of 10.10.10.0 255.255.255.0.
   3. The subnet route of 10.10.10.0.255.255.255.0 sends the IP packet to the CPU.
   4. The CPU of the device queries in the software ARP table that the egress of 10.10.10.1 is the port a of the board A, and then sends the IP packet in a manner of software forwarding.
   5. The CPU of the device synchronizes the ARP entry 10.10.10.1 to the source of the data packet, i.e., the board B.
   6. For subsequent data traffic, a hardware ARP entry of 10.10.10.1 can be queried on the board B, and therefore the subsequent data traffic can be directly forwarded in a manner hardware forwarding.
Scenario 3:
   ARP ageing time of 10.10.10.1 on the port a of the board A of the distributed device arrives and the corresponding aging operation is performed (ARP ages according to global situation).
   1. In a case where the aging time of the ARP 10.10.10.1 on the board A arrives before any ARP response is received, a corresponding aging operation needs to be performed.
   2. The CPU deletes the ARP entry of 10.10.10.1 on the board A.
   3. The CPU queries about the synchronization situation of the ARP entry on other boards, and if it is found that board B also issues this ARP entry, deletes ARP entry 10.10.10.1 of board B.
Scenario 4:
   Traffic of 10.10.10.1 at the port b of the board B of the distributed device disappears (ARP ages according to the traffic hit situation)
   1. The traffic of 10.10.10.1 on the board B has disappeared.
   2. The CPU judges the packet hit situation of the table entry of ARP entry 10.10.10.1 on board B.
   3. If the ARP entry is not hit for a period of time, then the ARP entry is deleted on the board B as required.
   4. If there is other traffic that triggers the ARP entry of 10.10.10.1 again, the ARP entry is issued again.
   5. If the ARP entry of 10.10.10.1 is aged on the A board, the ARP entry is deleted globally according to the method provided in scenario 3.

By means of the operations, the problems that an ARP synchronization mechanism in the related art results in a high cost and a low use efficiency of a network device, and thus cannot meet user requirements are solved, thereby achieving the effects of optimizing the utilization rate of the network device and saving the network costs.

Through the description of the above implementations, those having ordinary skill in the art can understand that the packet processing method according to the above embodiment may be implemented by means of software plus a necessary general hardware platform, and of course, may also be implemented through hardware, but in many cases, the former is a better implementation. Based on such understanding, the essence of technical solution of the embodiments of the present disclosure, or in other words, the part of the technical solutions making contributions to the conventional art, may be embodied in the form of a software product stored in a storage medium (such as a Read-Only Memory (ROM)/Random Access Memory (RAM), a magnetic disk and an optical disc), including a number of instructions for enabling a terminal device (which may be a mobile phone, a computer, a server, or a network device, etc.) to perform the packet processing methods described in various embodiments of the present disclosure.

### Embodiment 2

The embodiments provide a packet processing device. The packet processing device is used to implement the above embodiments and exemplary implementations, and the details having been described will not be repeated. As used below, the term "module" may implement a combination of software and/or hardware of a predetermined function. Although the packet processing device described in the following embodiments is preferably implemented in software, the implementation in hardware or a combination of software and hardware is also possible and contemplated.

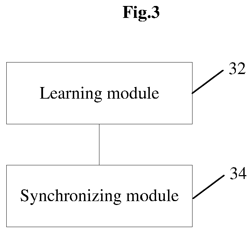

Fig. 3 is a structural block diagram of a packet processing device according to some embodiments of the present disclosure. As shown in Fig. 3, the packet processing device is located in a processor of a device and includes a learning module 32 and a synchronizing module 34.

The learning module 32 is configured to, in a case where a first board of the device receives an ARP packet, write an ARP entry formed according to the ARP packet into the first board.

The synchronizing module 34 is configured to, in a case where a second board of the device receives a data packet pointing to the ARP entry, synchronize the ARP entry to the second board.

It is to be noted that each of the above modules may be implemented by software or hardware. For the latter, the modules may be implemented by, but not limited to, either of the following manners: the above modules are all located in the same processor; or, the above modules are located in different processors in any combination form respectively.

### Embodiment 3

The embodiments of the present disclosure provide a storage medium. The storage medium stores a computer program. The computer program is configured to execute the operations in any one of the method embodiments at runtime.

In some exemplary implementations of the embodiments, the storage medium may be configured to store a computer program for executing operations S1 and S2 which are described in detail below.

At operation S1, in a case where a first board of a device receives an ARP packet, a processor of the device writes an ARP entry formed according to the ARP packet into the first board.

At operation S2, in a case where a second board of the device receives a data packet pointing to the ARP entry, the processor synchronizes the ARP entry to the second board.

In some exemplary implementations of the embodiments, the storage medium may include, but is not limited to, any medium that can store a computer program, such as a USB flash drive, a Read-Only Memory (ROM for short), a Random Access Memory (RAM for short), a removable hard disk, a magnetic disk, or an optical disc.

The embodiments of the present disclosure provide an electronic device, including a memory and a processor. The memory stores a computer program. The processor is configured to run the computer program to execute operations in any one of the method embodiments.

In some exemplary implementations, the electronic device may further include a transmission device and an input/output device, wherein the transmission device is connected to the processor, and the input/output device is connected to the processor.

In some exemplary implementations of the embodiments, the processor may be arranged to execute the following operations S1 and S2 by means of a computer program.

At operation S1, in a case where a first board of a device receives an ARP packet, a processor of the device writes an ARP entry formed according to the ARP packet into the first board.

At operation S2, in a case where a second board of the device receives a data packet pointing to the ARP entry, the processor synchronizes the ARP entry to the second board.

Specific implementations for the present embodiment may refer to the examples described in the above embodiments and alternative implementations, and details are not repeated in the present embodiment.

It is apparent that a person skilled in the art shall understand that all of the above-mentioned modules or operations in the present disclosure may be implemented by using a general computation device, may be centralized on a single computation device or may be distributed on a network composed of multiple computation devices. In some exemplary implementations, they may be implemented by using executable program codes of the computation devices. Thus, they may be stored in a storage device and executed by the computation devices, the shown or described operations may be executed in a sequence different from this sequence under certain conditions, or they are manufactured into each integrated circuit module respectively, or multiple modules or operations therein are manufactured into a single integrated circuit module. Thus, the embodiments of the present disclosure are not limited to any specific hardware and software combination.

The above is only the exemplary embodiments of the present disclosure, not intended to limit the present disclosure. As will occur to those having ordinary skill in the art, the present disclosure is susceptible to various modifications and changes.

## Claims

1. A packet processing method, comprising:
in a case where a first board of a device receives an address resolution protocol, ARP, packet, writing (S202), by a processor of the device, an ARP entry formed according to the ARP packet into the first board; and
in a case where a second board of the device receives a data packet pointing to the ARP entry, synchronizing (S204), by the processor, the ARP entry to the second board only.

2. The packet processing method according to claim 1, wherein writing (S202), by the processor, the ARP entry formed according to the ARP packet into the first board comprises:
generating, by the processor, the ARP entry after receiving the ARP packet; and
according to a port number of the ARP packet, determining, by the processor, the first board and sending, by the processor, the ARP entry into the first board.

3. The packet processing method according to claim 1, wherein synchronizing (S204), by the processor, the ARP entry to the second board only comprises:
receiving, by the processor, the data packet sent by the second board based on a subnet route, wherein the subnet route is a route determined by the second board in the device after failing to find a host route corresponding to the data packet;
upon determining that an egress of the data packet is the first board, sending, by the processor, the data packet to the first board in a manner of software forwarding; and
synchronizing, by the processor, the ARP entry to the second board.

4. The packet processing method according to claim 3, wherein in a case where the second board receives the data packet again, the second board sends the data packet to the first board in a manner of hardware forwarding.

5. The packet processing method according to claim 3 or 4, further comprising:
determining, by the processor, whether the ARP entry of the second board is hit by the data packet within an aging time; and
in a case where the ARP entry of the second board is not hit by the data packet within the aging time, instructing, by the processor, the second board to delete the ARP entry.

6. The packet processing method according to claim 5, further comprising: re-synchronizing, by the processor, the ARP entry to the second board in a case where the second board receives the data packet again.

7. The packet processing method according to claim 5, further comprising:
in a case where the ARP entry of the second board is not hit by the data packet within the aging time, instructing, by the processor, the first board to delete the ARP entry.

8. The packet processing method according to claim 7, further comprising:
querying, by the processor, a synchronization situation of a third board, wherein the third board is a synchronous board to which the ARP entry of the first board has been synchronized; and
in a case where it is determined that the ARP entry has been synchronized to the third board in synchronous boards, instructing, by the processor, the third board to delete the ARP entry.

9. The packet processing method according to any one of claims 1 to 8, wherein writing (S202), by the processor, the ARP entry formed according to the ARP packet into the first board further comprises:
writing, by the processor, egress port information and medium access control, MAC, information of the ARP into the first board.

10. A packet processing device, located in a processor of a device, the packet processing device comprising:
a learning module (32), configured to write, in a case where a first board of the device receives an address resolution protocol, ARP, packet, an ARP entry formed according to the ARP packet into the first board; and
a synchronizing module (34), configured to, in a case where a second board of the device receives a data packet pointing to the ARP entry, synchronize the ARP entry to the second board only.

11. The packet processing device according to claim 10, wherein the learning module (32) is configured to:
generate the ARP entry after receiving the ARP packet; and
according to a port number of the ARP packet, determine the first board and sending, by the processor, the ARP entry into the first board.

12. The packet processing device according to claim 10, wherein the synchronizing module (34) is configured to:
receive, by the processor, the data packet sent by the second board based on a subnet route, wherein the subnet route is a route determined by the second board in the device after failing to find a host route corresponding to the data packet;
upon determining that an egress of the data packet is the first board, send, by the processor, the data packet to the first board in a manner of software forwarding; and
synchronize, by the processor, the ARP entry to the second board.

13. The packet processing device according to any one of claims 10 to 12, wherein the learning module (32) is further configured to:
write egress port information and medium access control, MAC, information of the ARP into the first board.

14. A computer-readable storage comprising instructions that, when executed by a computer, cause the computer to execute the packet processing method according to any one of claims 1 to 9.

## Patentansprüche

1. Paketverarbeitungsverfahren, umfassend:
in einem Fall, in dem eine erste Platine eines Geräts ein ARP-Paket (Address Resolution Protocol) empfängt, Schreiben (S202), durch einen Prozessor des Geräts, eines entsprechend des ARP-Pakets erstellten ARP-Eintrags in die erste Platine; und
in einem Fall, in dem eine zweite Platine des Geräts ein Datenpaket empfängt, das auf den ARP-Eintrag verweist, Synchronisierung (S204), durch den Prozessor, des ARP-Eintrags nur mit der zweiten Platine.

2. Paketverarbeitungsverfahren nach Anspruch 1, wobei das Schreiben (S202), durch den Prozessor, des entsprechend dem ARP-Paket erstellten ARP-Eintrags in die erste Platine Folgendes umfasst:
Generieren, durch den Prozessor, des ARP-Eintrags nach Empfang des ARP-Pakets; und
anhand einer Portnummer des ARP-Pakets Ermitteln, durch den Prozessor, der ersten Platine und Versand, durch den Prozessor, des ARP-Eintrags an die erste Platine.

3. Paketverarbeitungsverfahren nach Anspruch 1, wobei die Synchronisierung (S204), durch den Prozessor, des ARP-Eintrags mit der zweiten Platine nur Folgendes umfasst:
Empfangen, durch den Prozessor, des von der zweiten Platine gestützt auf eine Subnetz-Route gesendeten Datenpakets, wobei die Subnetz-Route eine von der zweiten Platine im Gerät ermittelte Route ist, nachdem keine dem Datenpaket entsprechende Host-Route gefunden werden konnte;
nach Ermittlung, dass ein Ausgang des Datenpakets die erste Platine ist, Versenden des Datenpakets, durch den Prozessor, mittels Software-Weiterleitung an die erste Platine; und
Synchronisierung, durch den Prozessor, des ARP-Eintrags mit der zweiten Platine.

4. Paketverarbeitungsverfahren nach Anspruch 3, wobei in einem Fall, in dem die zweite Platine das Datenpaket erneut empfängt, die zweite Platine das Datenpaket mittels Hardware-Weiterleitung an die erste Platine sendet.

5. Paketverarbeitungsverfahren nach Anspruch 3 oder 4, ferner umfassend:
Ermittlung, durch den Prozessor, ob der ARP-Eintrag der zweiten Platine innerhalb einer Alterungszeit von dem Datenpaket erreicht wird; und
in einem Fall, in dem der ARP-Eintrag der zweiten Platine innerhalb der Alterungszeit nicht von dem Datenpaket erreicht wird, Anweisung, durch den Prozessor, an die zweite Platine, den ARP-Eintrag zu löschen.

6. Paketverarbeitungsverfahren nach Anspruch 5, ferner umfassend: Resynchronisierung, durch den Prozessor, des ARP-Eintrags mit der zweiten Platine in einem Fall, in dem die zweite Platine das Datenpaket erneut empfängt.

7. Paketverarbeitungsverfahren nach Anspruch 5, ferner umfassend:
in einem Fall, in dem der ARP-Eintrag der zweiten Platine nicht innerhalb der Alterungszeit vom Datenpaket erreicht wird, Anweisung, durch den Prozessor, an die erste Platine, den ARP-Eintrag zu löschen.

8. Paketverarbeitungsverfahren nach Anspruch 7, ferner umfassend:
Abfragen, durch den Prozessor, eines Synchronisierungszustands einer dritten Platine, wobei die dritte Platine eine Synchronplatine ist, mit der der ARP-Eintrag der ersten Platine synchronisiert wurde; und
in einem Fall, in dem ermittelt wird, dass der ARP-Eintrag in Synchronplatinen mit der dritten Platine synchronisiert wurde, Anweisung, durch den Prozessor, an die dritte Platine, den ARP-Eintrag zu löschen.

9. Paketverarbeitungsverfahren nach einem beliebigen der Ansprüche 1 bis 8, wobei das Schreiben (S202), durch den Prozessor, des entsprechend dem ARP-Paket erstellten ARP-Eintrags in die erste Platine außerdem Folgendes umfasst:
Schreiben, durch den Prozessor, von Ausgangsportinformationen und MAC-Informationen (Medium Access Control) des ARP in die erste Platine.

10. Paketverarbeitungsvorrichtung, die sich in einem Prozessor eines Geräts befindet, wobei die Paketverarbeitungsvorrichtung Folgendes umfasst:
ein Lernmodul (32), das dazu ausgelegt ist, in einem Fall, in dem eine erste Platine des Geräts ein ARP-Paket (Address Resolution Protocol) empfängt, einen entsprechend dem ARP-Paket erstellten ARP-Eintrag in die erste Platine zu schreiben; und
ein Synchronisierungsmodul (34), das dazu ausgelegt ist, in einem Fall, in dem eine zweite Platine des Geräts ein Datenpaket empfängt, das auf den ARP-Eintrag verweist, den ARP-Eintrag nur mit der zweiten Platine zu synchronisieren.

11. Paketverarbeitungsvorrichtung nach Anspruch 10, wobei das Lernmodul (32) auf Folgendes ausgelegt ist:
den ARP-Eintrag nach dem Empfang des ARP-Pakets zu generieren; und
entsprechend einer Portnummer des ARP-Pakets die erste Platine zu ermitteln und den ARP-Eintrag, durch den Prozessor, an die erste Platine zu senden.

12. Paketverarbeitungsvorrichtung nach Anspruch 10, wobei das Synchronisierungsmodul (34) auf Folgendes ausgelegt ist:
Empfangen, durch den Prozessor, des von der zweiten Platine gestützt auf eine Subnetz-Route gesendeten Datenpakets, wobei die Subnetz-Route eine Route ist, die von der zweiten Platine im Gerät ermittelt wird, nachdem keine dem Datenpaket entsprechende Host-Route gefunden werden konnte;
nach Feststellung, dass ein Ausgang des Datenpakets die erste Platine ist, Versand, durch den Prozessor, des Datenpakets mittels Softwareweiterleitung an die erste Platine; und
Synchronisierung, durch den Prozessor, des ARP-Eintrags mit der zweiten Platine.

13. Paketverarbeitungsvorrichtung nach einem beliebigen der Ansprüche 10 bis 12, wobei das Lernmodul (32) außerdem auf Folgendes ausgelegt ist:
Schreiben der Ausgangsportinformationen und MAC-Informationen (Medium Access Control) des ARP in die erste Platine.

14. Computerlesbare Speicherung, umfassend
Anweisungen, die, wenn sie von einem Computer ausgeführt werden, den Computer veranlassen, das Paketverarbeitungsverfahren entsprechend einem beliebigen der Ansprüche 1 bis 9 auszuführen.

## Revendications

1. Procédé de traitement de paquets, comprenant :
dans un cas où une première carte d'un dispositif reçoit un paquet de protocole de résolution d'adresse, ARP (Address Resolution Protocol), l'écriture (S202), par un processeur du dispositif, d'une entrée ARP formée selon le paquet ARP dans la première carte ; et
dans un cas où une deuxième carte du dispositif reçoit un paquet de données pointant vers l'entrée ARP, la synchronisation (S204), par le processeur, de l'entrée ARP avec la deuxième carte uniquement.

2. Procédé de traitement de paquets selon la revendication 1, dans lequel l'écriture (S202), par le processeur, de l'entrée ARP formée selon le paquet ARP dans la première carte comprend :
générer, par le processeur, l'entrée ARP après réception du paquet ARP ; et
en fonction d'un numéro de port du paquet ARP, déterminer, par le processeur, la première carte et envoyer, par le processeur, l'entrée ARP dans la première carte.

3. Procédé de traitement de paquets selon la revendication 1, dans lequel la synchronisation (S204), par le processeur, de l'entrée ARP sur la deuxième carte comprend uniquement :
la réception, par le processeur, du paquet de données envoyé par la deuxième carte sur la base d'une route de sous-réseau, dans lequel la route de sous-réseau est une route déterminée par la deuxième carte dans le dispositif après l'échec de la recherche d'une route d'hôte correspondant au paquet de données ;
lors de la détermination du fait qu'une sortie du paquet de données est la première carte, l'envoi, par le processeur, du paquet de données à la première carte sous forme de transfert logiciel ; et
la synchronisation, par le processeur, de l'entrée ARP avec la deuxième carte.

4. Procédé de traitement de paquets selon la revendication 3, dans lequel dans un cas où la deuxième carte reçoit à nouveau le paquet de données, la deuxième carte envoie le paquet de données à la première carte sous forme de transfert matériel.

5. Procédé de traitement de paquets selon la revendication 3 ou 4, comprenant en outre :
la détermination, par le processeur, de si l'entrée ARP de la deuxième carte est atteinte par le paquet de données au cours d'un temps de vieillissement ; et
dans le cas où l'entrée ARP de la deuxième carte n'est pas touchée par le paquet de données dans le temps de vieillissement, l'instruction, par le processeur, à la deuxième carte de supprimer l'entrée ARP.

6. Procédé de traitement de paquets selon la revendication 5, comprenant en outre : la resynchronisation, par le processeur, de l'entrée ARP sur la deuxième carte dans le cas où la deuxième carte reçoit à nouveau le paquet de données.

7. Procédé de traitement de paquets selon la revendication 5, comprenant en outre :
dans le cas où l'entrée ARP de la deuxième carte n'est pas touchée par le paquet de données dans le temps de vieillissement, l'instruction, par le processeur, à la première carte de supprimer l'entrée ARP.

8. Procédé de traitement de paquets selon la revendication 7, comprenant en outre :
l'interrogation, par le processeur, d'une situation de synchronisation d'une troisième carte, dans laquelle la troisième carte est une carte synchrone avec laquelle l'entrée ARP de la première carte a été synchronisée ; et
dans le cas où il est déterminé que l'entrée ARP a été synchronisée avec la troisième carte parmi des cartes synchrones, l'instruction, par le processeur, à la troisième carte de supprimer l'entrée ARP.

9. Procédé de traitement de paquets selon l'une quelconque des revendications 1 à 8, dans lequel l'écriture (S202), par le processeur, de l'entrée ARP formée selon le paquet ARP dans la première carte comprend en outre :
écrire, par le processeur, des informations de port de sortie et de contrôle d'accès au support, MAC, des informations de l'ARP dans la première carte.

10. Dispositif de traitement de paquets, situé dans un processeur d'un dispositif, le dispositif de traitement de paquets comprenant :
un module d'apprentissage (32), configuré pour écrire, dans le cas où une première carte du dispositif reçoit un protocole de résolution d'adresse, ARP (Address Resolution Protocol), paquet, une entrée ARP formée selon le paquet ARP dans la première carte ; et
un module de synchronisation (34), configuré pour, dans le cas où une deuxième carte du dispositif reçoit un paquet de données pointant vers l'entrée ARP, synchroniser l'entrée ARP sur la deuxième carte uniquement.

11. Dispositif de traitement de paquets selon la revendication 10, dans lequel le module d'apprentissage (32) est configuré pour :
générer l'entrée ARP après avoir reçu le paquet ARP ; et
en fonction d'un numéro de port du paquet ARP, déterminer la première carte et envoyer, par le processeur, l'entrée ARP dans la première carte.

12. Dispositif de traitement de paquets selon la revendication 10, dans lequel le module de synchronisation (34) est configuré pour :
recevoir, par le processeur, le paquet de données envoyé par la deuxième carte sur la base d'une route de sous-réseau, dans lequel la route de sous-réseau est une route déterminée par la deuxième carte dans le dispositif après l'échec de la recherche d'une route d'hôte correspondant au paquet de données ;
après avoir déterminé qu'une sortie du paquet de données est la première carte, envoyer, par le processeur, le paquet de données à la première carte sous forme de transfert de logiciel ; et
synchroniser, par le processeur, l'entrée ARP avec la deuxième carte.

13. Dispositif de traitement de paquets selon l'une quelconque des revendications 10 à 12, dans lequel le module d'apprentissage (32) est en outre configuré pour :
écrire des informations de port de sortie et de contrôle d'accès au support, MAC, des informations de l'ARP dans la première carte.

14. Mémoire lisible par ordinateur comprenant
des instructions qui, lorsqu'elles sont exécutées par un ordinateur, amènent l'ordinateur à exécuter le procédé de traitement de paquets selon l'une quelconque des revendications 1 à 9.
